# EUROPÄISCHE PATENTSCHRIFT

(11) **EP 3 337 739 B1**
(45) Veröffentlichungstag und Bekanntmachung des Hinweises auf die Patenterteilung: **19.02.2020**
(21) Anmeldenummer: 16758080.2
(22) Anmeldetag: 17.08.2016
(51) Int. Cl.: B65G 1/137, B65G 1/04

(54) **KOMMISSIONIERSYSTEM ZUM KOMMISSIONIEREN VON ARTIKELN ZUR AUFTRAGS- UND BATCHKOMMISSIONIERUNG**
PICKING SYSTEM FOR PICKING ARTICLES FOR ORDER AND BATCH PICKING
SYSTÈME DE PRÉPARATION DE MARCHANDISES POUR L'EXPÉDITION SERVANT À PRÉPARER DES ARTICLES AUX FINS DE LA PRÉPARATION DE COMMANDES ET DE LOTS

(30) Priorität: 19.08.2015 AT 2462015 U
(43) Veröffentlichungstag der Anmeldung: 27.06.2018
(73) Patentinhaber: Knapp AG, 8075 Hart bei Graz (AT)
(72) Erfinder: MATHI, Franz, 8200 Gleisdorf (AT); KOHOLKA, Roland, Acworth, Georgia 30101 (US); STOCK, Perter Herbert, Atlanta, Georgia 30363 (US); BINGLE, Rick, Black Diamond, WA 98010 (US)
(74) Vertreter: Röggla, Harald
(86) Internationale Anmeldenummer: PCT/AT2016/060030
(87) Internationale Veröffentlichungsnummer: WO 2017/027897

(56) Entgegenhaltungen:
- EP-A1- 2 862 818
- DE-B3-102011 116 081
- JP-A- 2001 253 515
- JP-B2- 3 633 679

## Beschreibung

Die Erfindung betrifft ein Kommissioniersystem zum Kommissionieren von Artikeln aus Lagerbehältern in Auftragsbehälter mit einem Steuerrechner zum Verwalten und Abarbeiten von Kommissionieraufträgen und mit zumindest einem Kommissionierplatz gemäß dem Ware-zu-Person-Prinzip an dem eine vom Steuerrechner vorgegebene Anzahl von Artikeln aus Lagerbehältern in Fördertaschen kommissionierbar sind und mit einer Hängefördertechnik zum Transport der Fördertaschen und mit einem Packplatz zum Packen der Fördertaschen entnommenen einem Kommissionierauftrag zugeordneten Artikel in den dem Kommissionierauftrag zugeordneten Auftragsbehälter.

Das Dokument DE 10 2011 116 081 B3 offenbart ein Kommissioniersystem nach dem Oberbegriff des Anspruchs 1 und ein Kommissionierverfahren nach dem Oberbegriff des Anspruchs 7. Insbesondere, offenbart das Dokument ein Kommissioniersystem mit einem Kommissionierplatz, bei dem eine Lagerbehälterfördertechnik Lagerbehälter in den Arbeitsbereich einer Kommissionierperson transportiert, worauf die von einer Steuereinrichtung angegebene Anzahl an Artikeln von der Kommissionierperson aus dem Lagerbehälter entnommen werden. Die Auftragsbehälterfördertechnik ist durch eine Hängefördertechnik gebildet und transportiert Fördertaschen an, worauf die Kommissionierperson die entnommenen Artikel in die von der Steuereinrichtung angegebenen Fördertaschen legt. Hierbei wird eine Batchkommissionierung durchgeführt, bei der Artikel mehrerer Aufträge in eine Fördertasche gelegt werden. In einem anschließenden Puffer- und Sortierbereich werden die Fördertaschen zwischengespeichert und/oder in die richtige Reihenfolge gebracht, um die Artikel in einer anschließenden Packstation in je einen Auftragsbehälter je Auftrag zu packen. Die Batchkommissionierung hat den Vorteil, dass die Lagerbehälterfördertechnik entlastet wird, da der Lagerbehälter einer bestimmten Art eines Artikels nicht jedes Mal aus- und nach der Kommissionierung wieder eingelagert werden muss, sondern gleich mehrere Artikel dieser Art für mehrere Aufträge entnommen und als "Batch" in eine Fördertasche kommissioniert werden können. Für Aufträge mit unterschiedlichen Anforderungen (z.B. Sequenzieranforderungen, Artikelsortiment, Sortierkriterien, Auftragsstruktur etc.) kann sowohl eine einstufige als auch eine zweistufige Auftragskommissionierung vorteilhafter sein. Kommissionieraufträge für B2B-Kunden (sogenannte "Shop-Order") enthalten üblicherweise eine große Anzahl an

Artikeln, wobei auch von jeder Artikelart zumeist mehrere Stücke im Kommissionierauftrag enthalten sind. Eine "Shop-Order" von beispielsweise einem Bekleidungsgeschäft kann Hemden vieler unterschiedlicher Fabrikate und Farben jeweils in allen Kleidergrößen enthalten, die sortiert in Auftragsbehälter kommissioniert werden müssen. Kommissionieraufträge für den B2C-Kunden (sogenannte "e-Commerce-Order") oder für B2B-Kunden mit nur kleinen Geschäften oder Nachbestellungen enthalten üblicherweise nur ein oder wenige Artikel, was dazu führt, dass Lagerbehälter mit diesen Artikeln sehr oft aus dem Regallager geholt und wieder in das Regallager zurückgebracht werden müssen. Der Erfindung liegt die Aufgabe zugrunde ein Kommissioniersystem und ein Kommissionierverfahren zu schaffen, bei dem mit möglichst geringer Belastung der Lagerbehälterfördertechnik sowohl Kommissionieraufträge von B2B-Kunden als auch von B2C-Kunden flexibel kommissioniert werden können. Erfindungsgemäß wird diese Aufgabestellung durch den Gegenstand der unabhängigen Ansprüche 1 und 7 gelöst.

Hierdurch ist der Vorteil erhalten, dass ein Lagerbehälter mit einer Artikelart von Artikel zum Kommissionieren einer Shop-Order nur einmal mit der Lagerbehälterfördertechnik zum Kommissionierplatz gefördert werden muss, da diese Artikelart dann sowohl in der gewünschten Anzahl in den Auftragsbehälter der Shop-Order als auch in Fördertaschen zur späteren Kommissionierung weiterer e-Commerce-Orders oder vergleichbarerer Kommissionieraufträge mit kleinen Stückzahlen kommissioniert werden kann. Hierdurch wird die Lagerbehälterfördertechnik deutlich entlastet.

Der Kommissionierplatz des Kommissioniersystems ermöglicht in einer ergonomisch gut zugänglichen Anordnung dass sowohl in, in der Anordnungsreihe angeordnete Fördertaschen und in, in der weiteren Anordnungsreihe angeordnete zweite Auftragsbehälter kommissioniert werden kann. Der Begriff Auftragsbehälter ist hierbei weit auszulegen und umfasst nicht nur Kisten und Fördertaschen, sondern auch einen für einen Auftrag auf der Auftragsbehälterfördertechnik reservierten Bereich. Je nach Ausgestaltung der Auftragsbehälter und der zugehörigen Auftragsbehälterfördertechniken ist durch den Kommissionierplatz eine große Flexibilität bezüglich der Art der Kommissionierung gegeben.

Vorteilhaft ist es die zweistufige Kommissionierung beziehungsweise Batchkommissionierung in Fördertaschen an dem Kommissionierplatz ermöglicht. An demselben Kommissionierplatz kann aber gleichzeitig oder auch zeitlich versetzt aus den Lagerbehältern in die unmittelbar neben den Lagerbehältern in der Anordnungsreihe angeordneten zweiten Auftragsbehältern, die durch Kisten gebildet sind, eine einstufige Kommissionierung durchgeführt werden. Die gleichzeitige Kommissionierung von ,,e-Commerce Orders" und von "Shop Orders" an einem Kommissionierplatz bringt den Vorteil, dass für die Kommissionierung in die Fördertaschen ein hoher Batchfaktor erreicht werden kann, da auch Aufträge bearbeitet werden können die nicht unmittelbar am Packplatz benötigt werden.

Vorteilhaft ist weiters je nach gewählter Auftragsbehälterfördertechnik und je nach gewählten Auftragsbehältern auch eine Festlegung durch die Steuereinrichtung des Kommissionierplatzes durchzuführen, ob mit der Hängefördertechnik oder mit der Auftragsbehälterfördertechnik eine Auftragskommissionierung und gegebenenfalls auch eine Batchkommissionierung durchgeführt wird. So könnte beispielsweise festgelegt werden, dass an dem Kommissionierplatz in die Fördertaschen Hängefördertechnik ausschließlich "Batches" kommissioniert werden, wobei in die Kisten der Auftragsbehälterfördertechnik sowohl einzelne Aufträge als auch "Batches" kommissioniert werden.

Besonders vorteilhaft ist bei dem erfindungsgemäßen Kommissioniersystem, dass eine Speicherschleife in Form eines Karussellförderers zum Speichern der Fördertaschen ausgebildet ist. Bei einer klassischen Sorterlösung gemäß dem Stand der Technik müssen für jeden Auftrag Rampen vorgesehen sein, um die bereits für diesen Auftrag kommissionierten Artikel zwischen zu speichern. Die Anzahl der Rampen limitiert daher die Anzahl der in einem Auftragspool parallel abgearbeiteten Kommissionieraufträge. Diese Limitierung ist bei dem erfindungsgemäßen Kommissioniersystem mit dem Karussellförderer und leicht vergrößerbarer Speicherkapazität nicht gegeben.

Weitere vorteilhafte Ausgestaltungen des erfindungsgemäßen Kommissioniersystems und Kommissionierplatzes werden im Folgenden anhand der Figuren näher erläutert.
Figur 1 zeigt einen Kommissionierplatz gemäß einem ersten Ausführungsbeispiel der Erfindung mit einer Hängefördertechnik in einer Schrägansicht.
Figur 2 zeigt den Kommissionierplatz gemäß Figur 1 in einer Schnittdarstellung von der Seite.
Figur 3 zeigt ein Kommissioniersystem mit zwei Kommissionierplätzen gemäß Figur 1 und einer Batchkommissionierung in Fördertaschen.

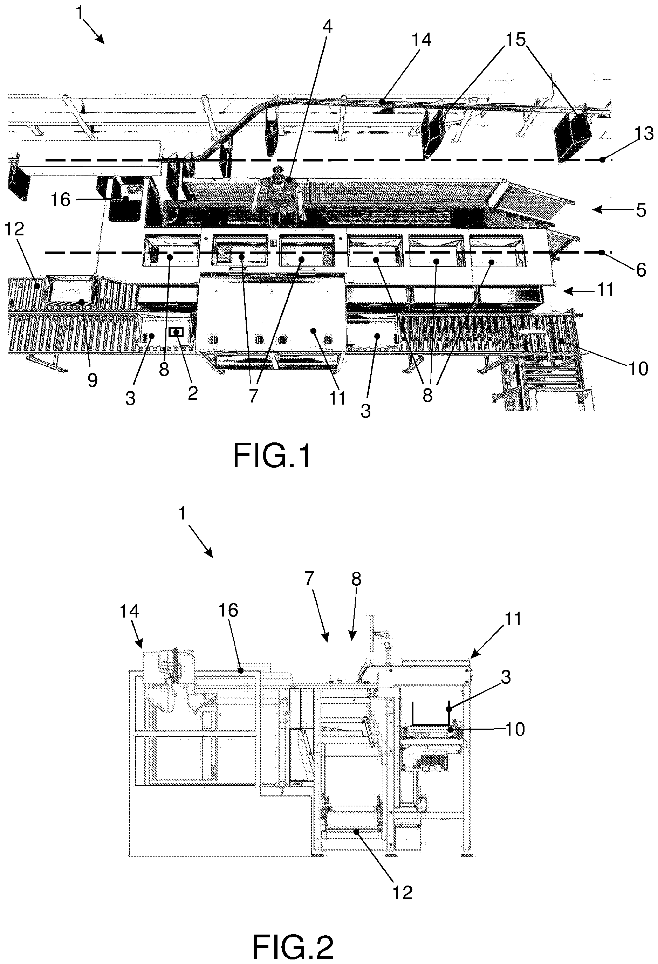

Figur 1 zeigt einen Kommissionierplatz 1 zum Kommissionieren von Artikeln 2 aus durch Kisten gebildeten Lagerbehältern 3 in Auftragsbehälter 9 nach dem Ware-zu-Person-Prinzip. Eine Kommissionierperson 4 kann sich in einem Kommissionierbereich 5 frei bewegen, der durch einen Gang gebildet und durch Treppen erreichbar leicht vom Boden abgehoben ist. Parallel zu dem Gang befindet sich eine Anordnungsreihe 6, in der zwei Lagerbehälterbuchten 7, zur Aufnahme von Lagerbehältern 3, und vier Auftragsbehälterbuchten 8, zur Aufnahme von durch Kisten gebildeten Auftragsbehältern 9 vorgesehen sind.

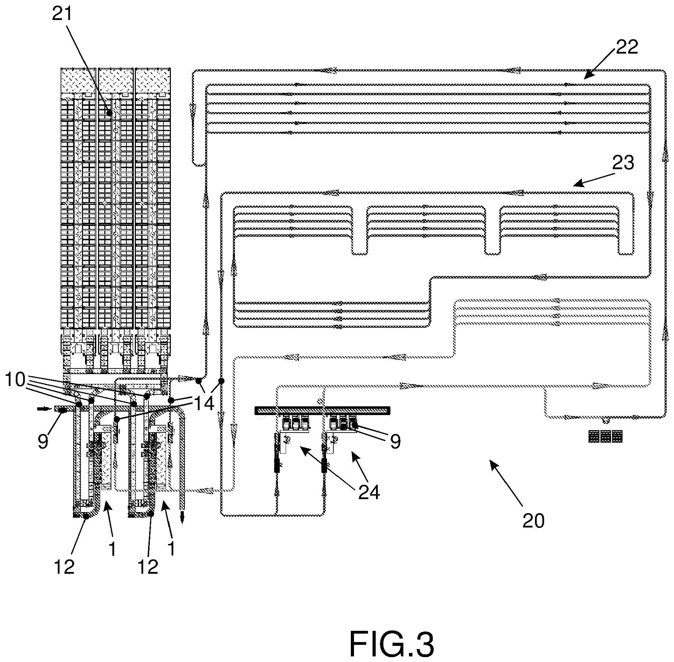

Der Kommissionierplatz 1 ist in einem in Figur 3 dargestellten Kommissioniersystem 20 vorgesehen, das ein Artikellager 21 zum Lagern der in den Lagerbehältern 3 vorgesehenen Artikeln 2 aufweist. Gesteuert von einem Steuerrechner werden Lagerbehälter 3 mit zum Kommissionieren benötigten Artikeln 2 durch eine Lagerbehälterfördertechnik 10 aus dem Artikellager 21 zu dem Kommissionierplatz 1 transportiert. Die Lagerbehälterfördertechnik 10 ist gemäß diesem Ausführungsbeispiel durch einen Rollenförderer gebildet, könnte bei einem Artikellager mit hängend gelagerten Artikeln wie Kleidungsstücken aber auch durch eine Hängefördertechnik gebildet sein. Die Lagerbehälterfördertechnik 10 transportiert die Lagerbehälter 3 in Manipulationsmittel 11 des Kommissionierplatzes 1, der in Figur 2 in einer Schnittdarstellung von der Seite dargestellt ist. Die Manipulationsmittel 11 transportieren den Lagerbehälter 3 in Richtung der Kommissionierperson 4 in eine der Lagerbehälterbuchten 7, um der Kommissionierperson 4 ein ergonomisches Entnehmen des zu kommissionierenden Artikels 2 zu ermöglichen. Nach dem Kommissionieren transportieren die Manipulationsmittel 11 den Lagerbehälter 3 wieder aus der Lagerbehälterbucht 7 und die Lagerbehälterfördertechnik 10 transportiert den Lagerbehälter 3 wieder in das Artikellager 21.

Der Kommissionierplatz 1 weist weiters eine durch einen Rollenförderer gebildete Auftragsbehälterfördertechnik 12 auf, die zum Transport der durch Kisten gebildeten Auftragsbehältern 9 ausgebildet ist. Ein einem Auftrag oder mehreren Aufträgen zugeordneter Auftragsbehälter 9 wird von der Auftragsbehälterfördertechnik 12 in die Manipulationsmittel 11 transportiert und von den Manipulationsmittel 11 unter eine der Auftragsbehälterbuchten 8 geschoben und von einer Behälterhebevorrichtung der Manipulationsmittel 11 in die Arbeitshöhe der Kommissionierperson 4 gehoben. Hierdurch ist ein ergonomisches Ablegen des zu kommissionierenden Artikels 2 in den Auftragsbehältern 9 ermöglicht.

Wie anhand der Figur 2 ersichtlich ist die Lagerbehälterfördertechnik 10 in einer Ebene über der Auftragsbehälterfördertechnik 12 angeordnet. Hierdurch ist der Vorteil erhalten, dass der Kommissionierplatz 1 besonders platzsparend realisiert werden kann. Hierzu wäre es auch möglich die Lagerbehälterfördertechnik 10 in einer Ebene unter der Auftragsbehälterfördertechnik 12 anzuordnen.

Der Kommissionierplatz 1 weist nunmehr eine entlang des Kommissionierbereichs 5 gegenüber der Anordnungsreihe 6 in einer weiteren Anordnungsreihe 13 angeordnete Hängefördertechnik 14 auf, mit der Fördertaschen 15 als transportiert werden. Hierdurch ist der Vorteil erhalten, dass aus den Lagerbehältern 3 entnommene Artikel 2 sowohl in eine Fördertasche 15 als auch in einen durch eine Kiste gebildeten Auftragsbehälter 9 kommissioniert werden können.

Der Kommissionierplatz 1 weist weiters einen Ablagebereich 16 als Abschluss des Kommissionierbereichs 5 zwischen der Anordnungsreihe 6 und der weiteren Anordnungsreihe 13 auf, wobei auf den Ablagebereich 16 kommissionierte Artikel 2 in Fördertaschen 15 der Hängefördertechnik 14 übergeführt werden und insbesondere in die Fördertaschen 15 rutschen. Hierdurch ist eine besonders einfache und zuverlässige Art der Überführung des kommissionierten Artikels 2 in die Fördertasche 15 erreicht.

Aufgrund der vielfältigen Möglichkeiten zur Kommissionierung an dem Kommissionierplatz 1 kann die Steuereinrichtung des Kommissionierplatzes 1 dazu ausgebildet sein entweder in erste Auftragsbehälter oder in zweite Auftragsbehälter eine reine Auftragskommissionierung oder eine Batchkommissionierung durchzuführen. Da sich die Kommissionieraufträge der Geschäfte und Endkunden tageszeitabhängig ändern kann auf die aktuelle Auslastung der Fördertechniken und Kommissionierplätze eingegangen werden, um im gesamten Kommissioniersystem einen möglichst hohen Durchsatz an Kommissionieraufträgen zu erzielen.

Die Kommissionierperson kann auch durch einen Kommissionierroboter ersetzt werden, mit dem die Aufgaben der Kommissionierperson erledigt werden können. Solche Kommissionierroboter sind dem Fachmann seit längerem bekannt, weshalb hier nicht näher darauf eingegangen ist.

Figur 3 zeigt das Kommissioniersystem 20 mit dem Artikellager 21, der Lagerbehälterfördertechnik 10, mit der Lagerbehälter 3 zu einem der beiden Kommissionierplätze 1 transportiert werden, um in dem Lagerbehälter 3 enthaltene Artikel 2 in einen der Auftragsbehälter 9 einer Shop-Order oder in Fördertaschen 15 zur Batchkommissionierung von e-Commerce-Orders zu kommissionieren. Die vorzugsweise einzeln in Fördertaschen 15 kommissionierten Artikel 2 werden durch die Hängefördertechnik 14 in eine Speicherschleife beziehungsweise einen Karussellförderer 22 transportiert, in dem die Fördertaschen 15 so lange im Kreis geführt und zwischengespeichert werden, bis sämtliche zur Abarbeitung einer e-Commerce-Order erforderlichen Artikel 2 in Fördertaschen 15 bereitstehen. Anschließend werden diese aus dem Karussellförderer 22 ausgeschleust und einer dreistufigen Sortierstufe 23 beziehungsweise einem Matrixsorter zugeführt, in der bis zu 12 Fördertaschen 15 eines oder mehrerer e-Commerce-Order in die richtige Reihenfolge sortiert werden. Anschließend werden die sortierten Fördertaschen 15 einem der beiden Packplätze 24 zugeführt, an dem die Artikel einer e-Commerce-Order aus der beziehungsweise den Fördertaschen 15 entnommen und in einen Auftragsbehälter zum Versandt gepackt werden. Leere Fördertaschen 15 werden von den Packplätzen 24 den Kommissionierplätzen 1 wieder zugeführt.

Durch das Kommissioniersystem 20 ist der Vorteil erhalten, dass das Artikellager 21 und die Lagerbehälterfördertechnik 10 wesentlich entlastet werden kann, da Lagerbehälter 3 nur einmalig ausgelagert werden müssen, um eine Auftrags- und Batchkommissionierung durchzuführen. Weiters ist durch den Karussellförderer 22 eine Entkopplung des Ein- und Auslagerungsprozesses des Artikellagers 21 von dem Kommissionierprozess an den Packplätzen 24 erreicht, wodurch kurzzeitige Leistungsspitzen am Kommissionierplatz durch vorauskommissionieren vermieden oder gemindert werden können. Durch das vorauskommissionieren und die Speicherfähigkeit des Systems kann ein hoher Batchfaktor erreicht werden. Der gewünschte Batchfaktor lässt sich mit der Dimensionierung der Speicherkapazität im Systemdesign festlegen.

Diese Entkopplung ist mit einer Bandfördertechnik nur sehr schwer durchführbar, da hierfür eine sehr große Anzahl an Rampen vorgesehen sein müsste. Besonders vorteilhaft ist bei dem Kommissioniersystem 20, dass die einzelnen Artikel 2 nicht so oft manuell bewegt beziehungsweise in die Hand genommen werden müssen, was die Kosten senkt und den Durchsatz erhöht.

Es kann erwähnt werden, dass Artikel 2 von Paletten oder Retouren auch direkt, also nicht am Kommissionierplatz 1, in Fördertaschen 15 gelegt und dem Karussellförderer 22 zugeführt werden könnten. Aber auch der Kommissionierplatz 1 eignet sich besonders vorteilhaft zur Verarbeitung von Retouren beziehungsweise retournierten Artikeln. Die Steuereinrichtung des Kommissionierplatzes 1 erkennt Lagerbehälter 3, in denen dem Kommissionierplatz 1 retournierte Artikel 2 zugeführt werden, oder erhält eine entsprechende Information von dem übergeordneten Steuerrechner des Kommissioniersystems 20. Als Retouren oder retournierte Artikel bezeichnet man Artikel 2, die bereits einmal als Auftrag kommissioniert wurden, vom Auftraggeber aber als nicht erwünscht wieder zurückgegeben oder geliefert wurden. Retouren können in Lagerbehältern 3 wieder in das Artikellager 21 eingelagert werden, bis diese für einen Kommissionierauftrag benötigt und wieder von dem Artikellager 21 zu dem Kommissionierplatz 1 ausgelagert werden. Besonders vorteilhaft ist es allerdings retournierte Artikel 2 in einem Lagerbehälter 3 dem Kommissionierplatz 1 zuzuführen und zur Zwischenspeicherung an dem Kommissionierplatz 1 in Fördertaschen 15 zu kommissionieren. Die Fördertasche 15 werden dann in dem Karussellförderer 22 als dynamischem Zwischenpuffer zwischengespeichert. Wenn so ein retournierter Artikel 2 in der Fördertasche 15 für einen Kommissionierauftrag benötigt wird, dann kann die Fördertasche 15 mit dem retournierten Artikel zum Packplatz 24 transportiert und der retournierte Artikel 2 direkt bei dem Packplatz 24 in den Auftragsbehälter 9 gelegt werden. Andererseits könnte die Fördertasche 15 mit dem retournierten Artikel auch zu dem Kommissionierplatz 1 transportiert werden und dort der retournierte Artikel 2 in den Auftragsbehälter 9 kommissioniert werden. Hierdurch ist eine besonders effiziente Verarbeitung von Retouren gegeben, ohne die Lagerbehälterfördertechnik 10 und das Artikellager 21 zu belasten.

Weiters könnten Kommissionieraufträge eines Auftragspools, der sich auf den derzeit vorliegenden oder ausgewählten Kommissionieraufträgen zusammensetzt, gemeinsam verarbeitet werden. In dem Fall würde aus einem Lagerbehälter 3 genau die Anzahl an Artikeln 2 einer Artikelart entnommen werden, die der Summe aller in den Kommissionieraufträgen des Auftragspools entsprechenden Anzahl dieser Artikelart entspricht. Die Anzahl an Artikeln 2 würde dann, wie vorstehen beschrieben, auf Auftragsbehälter 9 in Auftragsbehälterbuchten 8 und Fördertaschen 15 aufgeteilt werden.

Da sich der Auftragspool dynamisch ändern kann ist hierdurch eine besonders effiziente Art der Abarbeitung der Kommissionieraufträge mit dem Kommissionierplatz 1 in dem Kommissioniersystem 20 erreicht.

Gemäß einem weiteren in den Figuren nicht dargestellten Ausführungsbeispiel der Erfindung wäre die Hängefördertechnik im Vergleich zu der in der Figur 1 dargestellten Hängefördeliechnik 14 um 90 Grad gedreht an dem Kommissionierplatz angeordnet ist. Die weitere Anordnungsreihe würde gemäß diesem Ausführungsbeispiel also im Wesentlichen senkrecht auf die Anordnungsreihe stehen. Die Hängefördertechnik würde Fördertaschen zu einem ebenfalls um 90 Grad verdrehten Ablagebereich transportieren und würde die Fördertaschen nach Befüllung mit kommissionierten Artikeln über der Lagerbehälterfördertechnik und der zweiten Auftragsbehälterfördertechnik weiter transportieren. Auch eine umgekehrte Transportrichtung der Hängefördertechnik oder eine Anordnung der Anordnungsreihe und der weiteren Anordnungsreihe in einem anderen Winkel von beispielsweise 45 Grad wäre möglich. Die Anordnung der weiteren Anordnungsreihe im Wesentlichen senkrecht oder schräg auf die Anordnungsreihe hat den Vorteil, dass größere Flexibilität gegeben ist, um den Kommissionierplatz platzsparend in das gesamte Kommissioniersystem einzubinden.

Es kann erwähnt werden, dass die Lagerbehälterfördertechnik und die Auftragsbehälterfördertechnik im Rahmen dieser Erfindungsbeschreibung auch dann als in der Anordnungsreihe angeordnet zu verstehen sind, wenn diese Fördertechniken nur unwesentlich parallel zueinander versetzt angeordnet sind.

## Patentansprüche

1. Kommissioniersystem (20) zum Kommissionieren von Artikeln (2) aus Lagerbehältern (3) in Auftragsbehälter (9) mit
einem Steuerrechner zum Verwalten und Abarbeiten von Kommissionieraufträgen und mit zumindest einem Kommissionierplatz (1) gemäß dem Ware-zu-Person-Prinzip an dem eine vom Steuerrechner vorgegebene Anzahl von Artikeln (2) aus den mit einer Lagerbehälterfördertechnik (10) transportierten Lagerbehältern (3) in Fördertaschen (15) kommissionierbar sind und mit einer
Hängefördertechnik (14) zum Transport der Fördertaschen (15) und mit einem Packplatz (24) zum Packen der Fördertaschen (15) entnommenen einem Kommissionierauftrag zugeordneten Artikel (2) in den dem Kommissionierauftrag zugeordneten Auftragsbehälter (9), **dadurch gekennzeichnet, dass**
an dem Kommissionierplatz (1) eine Auftragsbehälterfördertechnik (12) zum Transport von Auftragsbehältern (9), insbesondere Kisten vorgesehen ist und, dass der Steuerrechner zum Abarbeiten eines ersten Kommissionierauftrags dazu ausgebildet ist die Anzahl der an dem Kommissionierplatz (1) zu kommissionierenden Artikel (2) derart vorzugeben, dass die zum Kommissionieren des ersten Kommissionierauftrags benötigte Anzahl an Artikeln (2) in den dem ersten Kommissionierauftrag zugeordneten Auftragsbehälter (9) und weitere in dem Lagerbehälter (3) enthaltene Artikel (2) in zumindest eine Fördertasche (15) zum späteren Kommissionieren weiterer Kommissionieraufträge am Packplatz (24) kommissioniert wird.

2. Kommissioniersystem (20) gemäß Anspruch 1, **dadurch gekennzeichnet, dass** die Hängefördertechnik (14) zumindest eine Speicherschleife (22) zum Zwischenspeichern von Artikel (2) enthaltenden Fördertaschen (15) aufweist und/oder dass mit der Hängefördertechnik (14) eine Sortiereinrichtung (23) zum Sortieren der in Fördertaschen (15) kommissionierten Artikel (2) gemäß den weiteren Kommissionieraufträgen ausgebildet ist.

3. Kommissioniersystem (20) gemäß einem der vorstehenden Ansprüche, **dadurch gekennzeichnet, dass** der Steuerrechner zum Abarbeiten der weiteren Kommissionieraufträge dazu ausgebildet ist die Anzahl der an dem Kommissionierplatz (1) zu kommissionierenden Artikel (2) derart vorzugeben, dass alle restlichen im Lagerbehälter (3) enthaltene Artikel (2) in zumindest eine Fördertasche (15) zum späteren Kommissionieren der weiterer Kommissionieraufträge am Packplatz (24) kommissioniert werden.

4. Kommissioniersystem (20) gemäß einem der vorstehenden Ansprüche, **dadurch gekennzeichnet, dass** der Steuerrechner zum Abarbeiten der weiteren Kommissionieraufträge dazu ausgebildet ist die Anzahl der an dem Kommissionierplatz (1) zu kommissionierenden Artikel (2) derart vorzugeben, dass die weiteren im Lagerbehälter (3) enthaltenen Artikel (2) einzeln in jeweils eine Fördertasche (15) zum späteren Kommissionieren der weitereren Kommissionieraufträge am Packplatz (24) kommissioniert werden.

5. Kommissioniersystem (20) gemäß einem der vorstehenden Ansprüche, **dadurch gekennzeichnet, dass** der Steuerrechner zum Abarbeiten einer Anzahl an weiteren Kommissionieraufträgen eines Auftragspools dazu ausgebildet ist die Anzahl der an dem Kommissionierplatz (1) zu kommissionierenden Artikel (2) derart vorzugeben, dass die für die in dem Auftragspool enthaltenen weiteren Kommissionieraufträgen benötigte Anzahl der im Lagerbehälter (3) enthaltenen Artikel (2) einzeln oder je weiterem Kommissionierauftrag gemeinsam in eine Fördertasche (15) zum späteren Kommissionieren dieser weiteren Kommissionieraufträge am Packplatz (24) kommissioniert werden.

6. Kommissioniersystem (20) gemäß einem der Ansprüche 1 bis 5, **dadurch gekennzeichnet, dass** die Fördertaschen (15) der Hängefördertechnik (14) zur Batchkommissionierung und die Auftragsbehälter (9) der Auftragsbehälterfördertechnik (12) zur Auftragskommissionierung genutzt werden.

7. Kommissionierverfahren zum Kommissionieren von Artikeln (2) aus Lagerbehältern (3) in Auftragsbehälter (9) für ein Kommissioniersystem (20) gemäß einem der Ansprüche 1 bis 6, das einen Steuerrechner zum Verwalten und Abarbeiten von Kommissionieraufträgen aufweist, der das Kommissionieren an zumindest einem Kommissionierplatz (1) und das Packen an einem Packplatz (24) gemäß folgenden Verfahrensschritten vorgibt:
Transport eines Lagerbehälters (3) mit der Lagerbehälterfördertechnik (10) mit für einen ersten Kommissionierauftrag benötigten Artikeln (2) von einem Lagerregal (21) zum Kommissionierplatz (1);
Kommissionieren der für den ersten Kommissionierauftrag benötigten Anzahl an Artikeln (2) aus dem Lagerbehälter (3) in den dem ersten Kommissionierauftrag zugeordnetem mit der Auftragsbehälterfördertechnik (12) transportierten Auftragsbehälter (9) an dem Kommissionierplatz (1);
**dadurch gekennzeichnet, dass** der Steuerrechner folgende weitere Verfahrensschritte vorgibt:
Kommissionieren weiterer in dem Lagerbehälter (3) enthaltener Artikel (2) in zumindest eine mit der Hängefördertechnik (14) transportierte Fördertasche (15) an dem Kommissionierplatz (1);
Transportieren der in Fördertaschen (15) kommissionierten Artikel (2) für weitere Kommissionieraufträge zu dem Packplatz (24);
Packen der Fördertaschen (15) entnommenen einem der weiteren Kommissionieraufträge zugeordneten Artikel (2) in den dem weiteren Kommissionierauftrag zugeordneten Auftragsbehälter (9).

8. Kommissionierverfahren gemäß Anspruch 7, **dadurch gekennzeichnet, dass** die weiteren in dem Lagerbehälter (9) enthaltenen Artikel (2) einzeln in je eine Fördertasche (15) an dem Kommissionierplatz (1) kommissioniert werden.

9. Kommissionierverfahren gemäß einem der Ansprüche 7 oder 8, **dadurch gekennzeichnet, dass** Artikel (2) für weitere Kommissionieraufträge enthaltende Fördertaschen (15) den weiteren Kommissionieraufträgen entsprechend sortiert dem Packplatz (24) zugeführt werden.

10. Kommissionierverfahren gemäß einem der Ansprüche 7 bis 9, **dadurch gekennzeichnet, dass** das Kommissionieren an dem zumindest einen Kommissionierplatz (1) und das Packen an dem zumindest einen Packplatz (24) durch die Zwischenspeicherung der für weitere Kommissionieraufträge benötigte Artikel (2) in Fördertaschen (15) zeitlich und örtlich entkoppelt erfolgt.

## Claims

1. An order picking system (20) for picking products (2) from storage containers (3) into order containers (9) comprising
a control computer for managing and executing picking orders and at least one order picking location (1) according to the goods-to-person principle at which a number of products (2) predetermined by the control computer may be picked from the storage containers (3) transported by means of a storage container conveying system (10) into conveying bags (15) and
a suspension conveying system (14) for transporting the conveying bags (15) and a packing location (24) for packing the products (2) taken from conveying bags (15) and assigned to a picking order into the order container (9) assigned to the picking order, **characterized in that**
an order container conveying system (12) for transporting order containers (9), in particular crates, is provided at the order picking location (1) and that the control computer for executing a first picking order is designed to predetermine the number of products (2) to be picked at the order picking location (1) such that the number of products (2) required for picking the first picking order is picked into the order container (9) assigned to the first picking order and further products (2) contained in the storage container (3) are picked into a conveying bag (15) for later picking of further picking orders at the packing location (24).

2. The order picking system (20) according to claim 1 **characterized in that** the suspension conveying system (14) has at least one retaining loop (22) for temporarily retaining conveying bags (15) containing products (2) and/or that a sorting facility (23) is provided with the suspension conveying system (14) for sorting the products (2) picked into conveying bags (15) according to the further picking orders.

3. The order picking system (20) according to any one of the preceding claims **characterized in that** the control computer for executing the further picking orders is designed to predetermine the number of products (2) to be picked at the order picking location (1) such that all remaining products (2) contained in the storage container (3) are picked into at least one conveying bag (15) for later picking of the further picking orders at the packing location (24).

4. The order picking system (20) according to any one of the preceding claims **characterized in that** the control computer for executing the further picking orders is designed to predetermine the number of products (2) to be picked at the order picking location (1) such that the further products (2) contained in the storage container (3) are each separately picked into a conveying bag (15) for later picking of the further picking orders at the packing location (24).

5. The order picking system (20) according to any one of the preceding claims **characterized in that** the control computer for executing a number of further picking orders of an order pool is designed to predetermine the number of products (2) to be picked at the order picking location (1) such that the number of products (2) contained in the storage container (3) required for the further picking orders contained in the order pool are separately or collectively, according to each further picking order, picked into a conveying bag (15) for later picking of these further picking orders at the picking location (24).

6. The order picking system (20) according to any of the claims 1 to 5 **characterized in that** the conveying bags (15) of the suspension conveying system (14) are used for batch picking and the order containers (9) of the order container conveying system (12) are used for order picking.

7. Order picking process for picking products (2) from storage containers (3) into order containers (9) for an order picking system (20) according to any of the claims 1 to 6 having a control computer for managing and executing picking orders that predetermines picking at at least one order picking location (1) and packing at a packing location (24) according to the following process steps:
transporting, by means of the storage container conveying system (10), a storage container (3) with products (2) required for a first picking order from a storage rack (21) to the order picking location (1);
picking the number of products (2) required for the first picking order from the storage container (3) into the order container (9) that is assigned to the first picking order and transported by means of the order container conveying system (12) at the order picking location (1);
**characterized in that** the control computer provides the following further process steps:
picking further products (2) contained in the storage container (3) into at least one conveying bag (15) transported by means of the suspension conveying system (14) at the order picking location (1);
transporting the products (2) picked into conveying bags (15) for further picking orders to the packing location (24);
packing the products (2) taken from the conveying bags (15) and assigned to one of the further picking orders into the order container (9) assigned to the further picking order.

8. Order picking process according to claim 7 **characterized in that** the further products (2) contained in the storage container (9) are each separately picked into a conveying bag (15) at the order picking location (1).

9. Order picking process according to any one of the claims 7 or 8 **characterized in that** conveying bags (15) containing products (2) for further picking orders are delivered to the packing location (24) sorted according to the further picking orders.

10. Order picking process according to any one of the claims 7 to 9 **characterized in that** the picking at the at least one order picking location (1) and the packing at the at least one packing location (24) occur in a temporarily and spatially decoupled manner by temporarily retaining the products (2) required for further picking orders in conveying bags (15).

## Revendications

1. Système de préparation de marchandises pour l'expédition (20) servant à préparer des articles (2) à partir de bacs de stockage (3) dans des bacs de commande (9), avec
- un ordinateur de commande pour la gestion et le traitement de demandes de préparation de marchandises et avec
- au moins un site de préparation de marchandises (1) selon le principe "une marchandise pour une personne" où un nombre d'articles (2) prédéterminé par l'ordinateur de commande peuvent être préparés à partir des bacs de stockage (3) transportés par un mécanisme de transport de bacs de stockage (10) dans des sacs de transport (15) et avec
- un mécanisme de transport suspendu (14) pour le transport des sacs de transport (15) et avec
- un site d'emballage (24) pour l'emballage des articles (2) prélevés dans des sacs de transport (15) et associés à une demande de préparation de marchandises dans le bac de commande (9) associé à la demande de préparation de marchandises, **caractérisé en ce que**
- il est prévu sur le site de préparation de marchandises (1) un mécanisme de transport de bacs de commande (12) pour le transport de bacs de commande (9), en particulier de caisses, et
- l'ordinateur de commande pour le traitement d'une première demande de préparation de marchandises est configuré pour prédéterminer le nombre des articles à préparer (2) sur le site de préparation de marchandises (1), de telle manière que le nombre d'articles (2) nécessaires pour la préparation de marchandises de la première demande de préparation de marchandises soient préparés dans le bac de commande (9) associé à la première demande de préparation de marchandises et que d'autres articles (2) contenus dans le bac de stockage (3) soient préparés dans au moins un sac de transport (15) pour la préparation ultérieure de marchandises d'autres demandes de préparation de marchandises sur le site d'emballage (24).

2. Système de préparation de marchandises pour l'expédition (20) selon la revendication 1, **caractérisé en ce que** le mécanisme de transport suspendu (14) présente au moins une boucle d'accumulation (22) pour l'accumulation intermédiaire de sacs de transport (15) contenant des articles (2) et/ou **en ce qu'**un dispositif de tri (23) pour le tri des articles (2) préparés dans des sacs de transport (15) selon les autres demandes de préparation de marchandises est formé avec le mécanisme de transport suspendu (14).

3. Système de préparation de marchandises pour l'expédition (20) selon l'une quelconque des revendications précédentes, **caractérisé en ce que** l'ordinateur de commande pour le traitement des autres demandes de préparation de marchandises est configuré pour prédéterminer le nombre des articles à préparer (2) sur le site de préparation de marchandises (1), de telle manière que tous les articles résiduels (2) contenus dans le bac de stockage (3) soient préparés sur le site d'emballage (24) dans au moins un sac de transport (15) en vue de la préparation ultérieure de marchandises des autres demandes de préparation de marchandises.

4. Système de préparation de marchandises pour l'expédition (20) selon l'une quelconque des revendications précédentes, **caractérisé en ce que** l'ordinateur de commande pour le traitement des autres demandes de préparation de marchandises est configuré pour prédéterminer le nombre des articles à préparer (2) sur le site de préparation de marchandises (1) de telle manière que les autres articles (2) contenus dans le bac de stockage (3) soient préparés individuellement sur le site d'emballage (24) chacun dans un sac de transport (15) en vue de la préparation ultérieure de marchandises des autres demandes de préparation de marchandises.

5. Système de préparation de marchandises pour l'expédition (20) selon l'une quelconque des revendications précédentes, **caractérisé en ce que** l'ordinateur de commande pour le traitement d'un nombre d'autres demandes de préparation de marchandises d'un centre de commandes est configuré pour prédéterminer le nombre des articles à préparer (2) sur le site de préparation de marchandises (1) de telle manière que le nombre des articles (2) contenus dans le bac de stockage (3) nécessaires pour les autres demandes de préparation de marchandises contenues dans le centre de commandes soient préparés sur le site d'emballage (24) individuellement ou ensemble pour chaque autre demande de préparation de marchandises dans un sac de transport (15) en vue de la préparation ultérieure de marchandises de ces autres demandes de préparation de marchandises.

6. Système de préparation de marchandises pour l'expédition (20) selon l'une quelconque des revendications 1 à 5, **caractérisé en ce que** l'on utilise les sacs de transport (15) du mécanisme de transport suspendu (14) pour la préparation de marchandises par lots et les bacs de commande (9) du mécanisme de transport de bacs de commande (12) pour la préparation de commandes de marchandises.

7. Procédé de préparation de marchandises pour l'expédition servant à préparer des articles (2) à partir de bacs de stockage (3) dans des bacs de commande (9) pour un système de préparation de marchandises (20) selon l'une quelconque des revendications 1 à 6, qui présente un ordinateur de commande pour la gestion et le traitement de demandes de préparation de marchandises pour l'expédition, qui prédétermine la préparation de marchandises sur au moins un site de préparation de marchandises (1) et l'emballage sur un site d'emballage (24) suivant les étapes de procédé suivantes:
- transport d'un bac de stockage (3) avec le mécanisme de transport de bacs de stockage (10) avec des articles (2) nécessaires pour une première demande de préparation de marchandises depuis un rayonnage de stockage (21) jusqu'au site de préparation de marchandises (1);
- préparation des marchandises du nombre d'articles (2) nécessaire pour la première demande de préparation de marchandises du bac de stockage (3) au bac de commande (9) associé à la première demande de préparation de marchandises et transporté par le mécanisme de transport de bacs de commande (12) sur le site de préparation de marchandises (1),
**caractérisé en ce que** l'ordinateur de commande prédétermine les autres étapes de procédé suivantes:
- préparation des marchandises d'autres articles (2) contenus dans le bac de stockage (3) dans au moins un sac de transport (15) transporté avec le mécanisme de transport suspendu (14) sur le site de préparation de marchandises (1);
- transport des articles (2) préparés dans des sacs de transport (15) pour d'autres demandes de préparation de marchandises jusqu'au site d'emballage (24);
- emballage des articles (2) prélevés dans des sacs de transport (15) et associés à une des autres demandes de préparation de marchandises dans le bac de commande (9) associé à l'autre demande de préparation de marchandises.

8. Procédé de préparation de marchandises pour l'expédition selon la revendication 7, **caractérisé en ce que** l'on prépare les autres articles (2) contenus dans le bac de stockage (9) individuellement chacun dans un sac de transport (15) sur le site de préparation de marchandises (1).

9. Procédé de préparation de marchandises pour l'expédition selon une des revendications 7 ou 8, **caractérisé en ce que** des sacs de transport (15) contenant des articles (2) pour d'autres demandes de préparation de marchandises sont triés selon les autres demandes de préparation de marchandises et envoyés au site d'emballage (24).

10. Procédé de préparation de marchandises pour l'expédition selon l'une quelconque des revendications 7 à 9, **caractérisé en ce que** l'on effectue la préparation de marchandises sur ledit au moins un site de préparation de marchandises (1) et l'emballage sur ledit au moins un site d'emballage (24) d'une façon temporellement et localement découplée par l'accumulation intermédiaire des articles (2) nécessaires pour d'autres demandes de préparation de marchandises dans des sacs de transport (15).
